# EUROPEAN PATENT APPLICATION

(11) **EP 4 737 094 A1**
(43) Date of publication of application: **06.05.2026**
(21) Application number: 24832143.2
(22) Date of filing: 28.06.2024
(51) Int. Cl.: B29C 45/14, B29C 33/12, B29C 45/37, B65D 1/00

(54) **CONTAINER MANUFACTURING METHOD, MOLD, AND CONTAINER**

(30) Priority: 30.06.2023 JP 2023108395
(71) Applicant: Hosokawa Yoko Co., Ltd., Tokyo 102-0084 (JP)
(72) Inventor: ICHIKAWA Toru, Tokyo 102-0084 (JP); SHINOHARA Tomonari, Tokyo 102-0084 (JP)
(74) Representative: Krauns, Christian
(86) International application number: PCT/JP2024/023647
(87) International publication number: WO 2025/005287

(57) **Abstract**

A frame mold including an upper mold and a lower mold provided with a mold core (20) is used, a tubular body film (10) made of plastic film laminate is attached to the mold core (20), a molten resin material is injected into the frame mold by an insert injection molding means to form a bottom member in an upper end portion of the body film (10) and to form a frame member in a lower end portion of the body film (10), a concave portion (24) extending in an upward/downward direction is formed in at least upper and lower end portions of an attachment surface of the mold core (20) for the body film (10), a convex portion (25) is formed in a position of the frame mold corresponding to the concave portion (24), and the bottom member and the frame member are formed in a state in which the body film (10) is sandwiched between the concave portion (24) and the convex portion (25).

## Description

### TECHNICAL FIELD

The present invention relates to a container-manufacturing method, a mold, and a container.

Priority is claimed on Japanese Patent Application No. 2023-108395, filed June 30, 2023, the content of which is incorporated herein by reference.

### BACKGROUND ART

In the related art, for example, as containers for containing contents, for which preservability is important, such as powdered milk for infants, powdered coffee, coffee beans, and powdered supplements, tubular plastic containers have been used, which can be reduced in volume after use, are highly disposable, and are made of thin plastic film laminate.

In such a plastic container, a method of inserting a body film into an injection mold when molding the plastic container by a film-inserting method for the mold is known (for example, see Patent Document 1). That is, the plastic container includes a body part having a tubular shape with bottom and molded of a plastic film into a tubular shape, and molded parts coupled to one end side and another end side of body part by an insert injection molding means.

Then, Patent Document 1 discloses a method of pushing a laminated tubular member to a tip portion of a mold core, which is a molding core, guiding the laminated tubular member toward a base end of the mold core while injecting a gas to a space between the mold core and the laminated tubular member, and attaching the laminated tubular member to an outer surface of the mold core.

### Citation List

### Patent Document

Patent Document 1: Japanese Unexamined Patent Application, First Publication No. 2011-189682

### SUMMARY OF INVENTION

### Technical Problem

However, the plastic container in the related art has the following problems.

In the plastic container-manufacturing method in the related art disclosed in Patent Document 1, the perimeter of the laminated tubular member (body film), which is made of plastic laminate film and is to be attached (inserted) to the mold core, is the same as the perimeter of the mold core, so it may be difficult to attach the laminated tubular member to the mold core.

Therefore, if the perimeter of the body film is increased (lengthened) to make it easier to attach the body film to the mold, when molds are closed, the extra length of the perimeter of the body film that closely contacts the mold core will be gathered between the molds, causing wrinkles by pinching the extra length portion of the body film between the molds, so there are a quality issue and a room for improvement.

The present invention has been made in consideration of the above-described circumstances, and an object thereof is to provide a container-manufacturing method, a mold, and a container that allow a body film to be easily attached to a mold core, and prevent the film from being pinched during mold closure to suppress deterioration in appearance quality.

Aspect 1 of a container-manufacturing method of the present invention includes: using a frame mold including an upper mold and a lower mold provided with a mold core; attaching a tubular body film to the mold core; injecting a molten resin material into the frame mold by an insert injection molding means to form an upper molded part in an upper end portion of the body film and to form a lower molded part in a lower end portion of the body film, in which a concave portion extending in an upward/downward direction is formed in at least upper and lower end portions of an attachment surface of the mold core for the body film, a convex portion is formed in a position of the frame mold corresponding to the concave portion, and the upper molded part and the lower molded part are formed in a state in which the body film is sandwiched between the concave portion and the convex portion.

According to Aspect 1 of the container-manufacturing method of the present invention, since the perimeter of the body film is larger than the perimeter of the mold core excluding the concave portion, the body film can be easily attached to the mold core.

In addition, when the molds are to be closed, the concave portion of the mold core and the convex portion on the frame mold side fit together through the body film, which allows the body film to closely contact the concave portion, causes no excess portion of the body film in the circumferential direction, and allows the entire body film to closely contact the mold core. Therefore, it is possible to prevent the body film from being pinched during mold closure as in the related art, to form the upper and lower molded parts in the upper and lower end portions of the body film with high quality, and to suppress deterioration in the appearance quality of the container.

Aspect 2 of the present invention is that in the container-manufacturing method of Aspect 1, the concave portion is provided on an entire length of the mold core in the upward/downward direction.

In this case, the body film of the formed container is easily removed from the mold core in the upward/downward direction. Therefore, it is possible to obtain a simple configuration in which the mold core is removed from the body film in one direction, which can simplify the mold and reduce manufacturing costs.

Aspect 3 of the present invention is that in the container-manufacturing method of Aspect 1 or Aspect 2, a mold surface in which the convex portion is formed moves in a direction orthogonal to the attachment surface.

In this case, since the convex portion of the frame mold can be caused to contact, in a direction orthogonal to the concave portion of the mold core, the concave portion that extends in the upward/downward direction, the body film can be securely attached to the concave portion during mold closure.

Aspect 4 of the present invention is that in the container-manufacturing method of any one of Aspect 1 to Aspect 3, the mold core, whose lateral cross section is rectangular, is used.

In this case, the attachment surface of the rectangular mold core for the body film is flat, and the concave portion can be formed in the flat attachment surface. Therefore, the convex portion of the frame mold can be easily and securely engaged with the concave portion during mold closure.

Aspect 5 of the mold according to the present invention is that in the container-manufacturing method of any one of Aspect 1 to Aspect 4, the concave portion is formed in each of two side surface portions located to be opposite to each other of four attachment surfaces, the attachment surface including the four attachment surfaces.

In this case, with a simple structure in which the convex portions of the frame mold are engaged with the concave portions of the two side surface portions located to be opposite to each other from both sides with the mold core interposed therebetween, the body film can be attached uniformly in the circumferential direction to the mold core, allowing high-quality containers with excellent appearance to be manufactured.

Aspect 6 of the present invention is that in the container-manufacturing method of any one of Aspect 1 to Aspect 4, the concave portion is formed in each of four attachment surfaces, the attachment surface including the four attachment surfaces.

In this case, the convex portions of the frame mold are engaged with all of the concave portions of the four attachment surfaces, allowing the body film to be attached uniformly in the circumferential direction to the mold core, and allowing high-quality containers with excellent appearance to be manufactured.

Aspect 7 of the present invention is that in the container-manufacturing method according to any one of Aspect 1 to Aspect 6, the upper molded part is formed in a state in which a bottom surface film is placed on a top surface of the mold core.

In this case, by closing the upper mold, the bottom surface film can be attached to the top surface of the mold core to form the upper forming part.

Aspect 8 of the present invention is that in the container-manufacturing method of any one of Aspect 1 to Aspect 7, a connecting portion connecting two portions of the body film together in a circumferential direction, and the concave portion are positioned in different positions in the circumferential direction.

In this case, since the connecting portion of the body film and the concave portion do not overlap, the convex portion can be engaged with the concave portion in a state in which the body film is sandwiched therebetween, and the body film can be attached to the entire mold core in the circumferential direction.

Aspect 9 of a mold according to the present invention includes a frame mold including an upper mold and a lower mold, in which the lower mold is provided with a mold core to which a tubular body film is attached, the frame mold is provided with a resin injection part configured to inject a molten resin material by an insert injection molding means thereinto to form an upper molded part in an upper end portion of the body film and to form a lower molded part in a lower end portion of the body film, a concave portion extending in an upward/downward direction is formed in at least upper and lower end portions of an attachment surface of the mold core for the body film, a convex portion is formed in a position of the frame mold corresponding to the concave portion, and the mold is configured to form the upper molded part and the lower molded part in a state in which the body film is sandwiched between the concave portion and the convex portion.

According to Aspect 9 of the mold of the present invention, when inserting the body film into the mold core, the mold core is formed to have a perimeter such that the body film is not attached to the mold core along the concave portion. That is, since the perimeter of the body film is larger than the perimeter of the mold core excluding the concave portion, the film insertion to the mold core can be easily performed.

In addition, when the molds are to be closed, by closing the molds in a state in which the body film is sandwiched between the concave portion of the mold core and the convex portion on the frame mold side, the body film is allowed to closely contact the concave portion, and the entire body film is allowed to closely contact the mold core without any excess of the body film in the circumferential direction. Therefore, this can prevent pinching of the body film during mold closure as in the related art, and allows the upper and lower molded parts to be formed in upper and lower end portions of the body film with high quality, suppressing deterioration in the appearance quality of the container. It is possible to provide the container that can obtain the above-described effects.

Aspect 10 of a container according to the present invention is manufactured by the container-manufacturing method of any one of Aspect 1 to Aspect 8.

According to Aspect 10 of the container-manufacturing method of the present invention, it is possible to provide the container that can obtain the above-described effects.

Aspect 11 of a container according to the present invention is manufactured using the mold of Aspect 9.

According to Aspect 11 of the container-manufacturing method of the present invention, it is possible to provide the container that can obtain the above-described effects.

### Advantageous Effects of Invention

According to the container-manufacturing method, the mold, and the container according to the present invention, it is possible to easily perform film insertion to the mold core and to prevent the film from being pinched during mold closure to suppress deterioration in appearance quality.

### BRIEF DESCRIPTION OF DRAWINGS

[FIG. 1] A perspective view showing an example of a container main body of a container according to an embodiment of the present invention.
[FIG. 2] A perspective view of the container main body shown in FIG. 1 when seen from a bottom side.
[FIG. 3] A view along III-III line in arrow direction shown in FIG. 1 and a side view of the container main body.
[FIG. 4] A view along IV-IV line in arrow direction shown in FIG. 1 and a side view of the container main body.
[FIG. 5] A plan view of the container main body shown in FIG. 1 when seen from an upper end portion.
[FIG. 6] A side view of a mold for manufacturing the container main body, showing a state in which the mold is closed.
[FIG. 7] A plan view showing a state in which a slide mold is open.
[FIG. 8] A plan view showing a state in which only a slide insert portion of the slide mold is closed.
[FIG. 9] A plan view showing a state in which the slide insert portion and a slide mold closure portion of the slide mold are closed.
[FIG. 10A] A side view showing a step of attaching a body film to the mold shown in FIG. 6.
[FIG. 10B] A side view showing a step of attaching the body film to the mold shown in FIG. 6.
[FIG. 10C] A side view showing a step of attaching the body film to the mold shown in FIG. 6.
[FIG. 11] A side view of the mold shown in FIG. 6, showing a state in which the mold is open.

### DESCRIPTION OF EMBODIMENTS

Hereinafter, embodiments of a container-manufacturing method, a mold, and a container according to the present invention will be described with reference to the drawings.

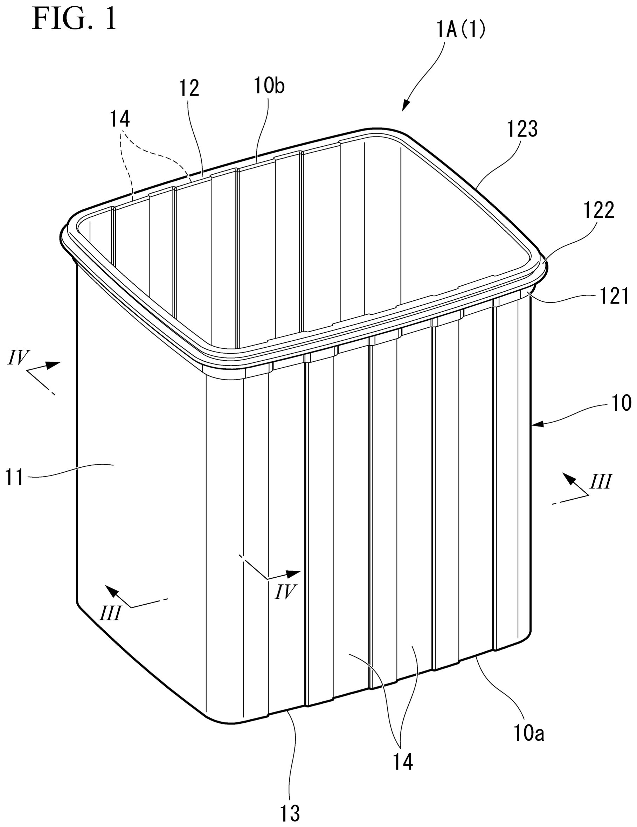

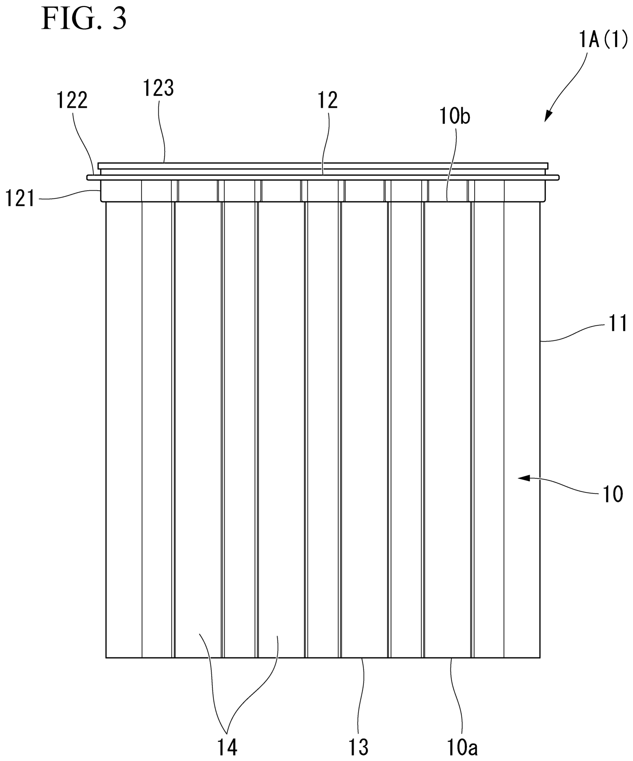

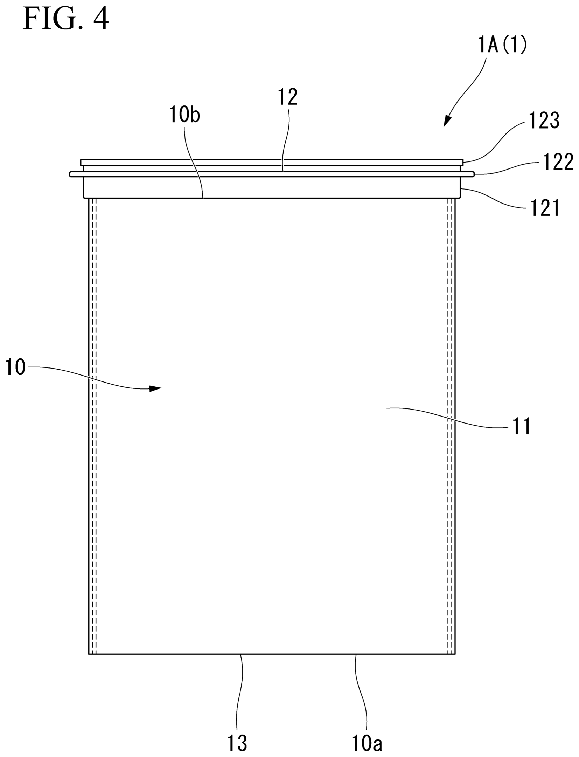

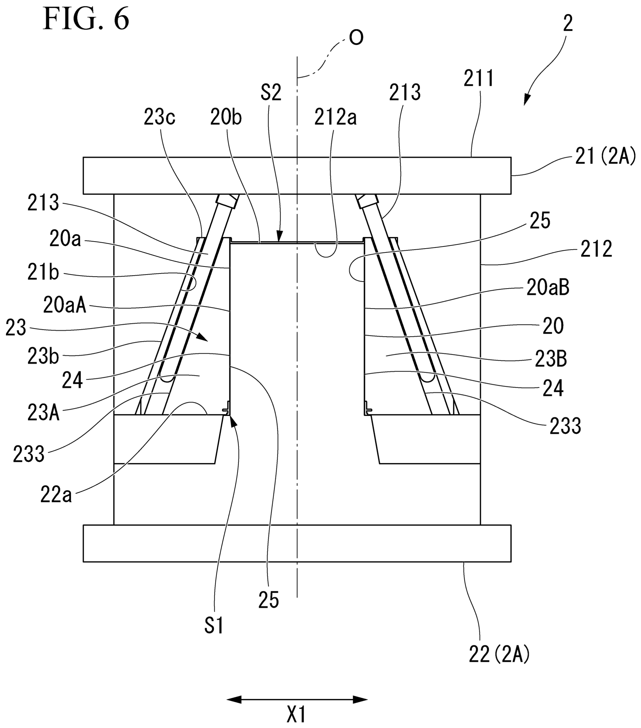

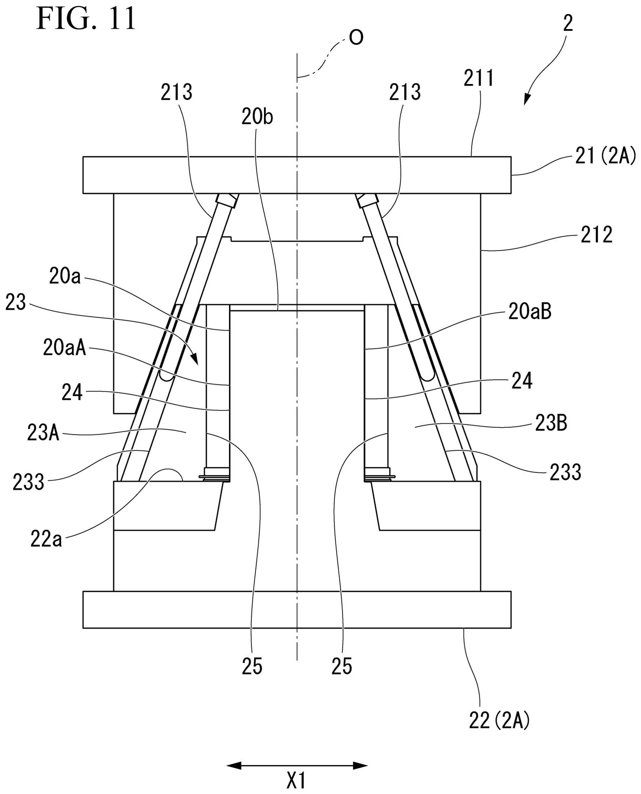

In a method of manufacturing a container 1 of the present embodiment shown in FIG. 1 to FIG. 5, a frame mold 2A is used including an upper mold 21 and a lower mold 22 provided with a mold core 20, a tubular body film 10 made of plastic film laminate is attached to the mold core 20, and a molten resin material is injected into the frame mold 2A (upper mold 21 and lower mold 22) by an insert injection molding means to form a bottom member 13 (upper molded part) in an upper end portion (upper opening end 10a) of the body film 10 and to form a frame member 12 (lower molded part) in a lower end portion (lower opening end 10b), as shown in FIG. 6 to FIG. 11.

### <Container Configuration>

Here, the container 1 manufactured will be described with reference to FIG. 1 to FIG. 5. The container 1 includes a container main body 1A, and a lid member (not shown) fitted into the upper opening end 10a of the container main body 1A. A body portion of the container 1 is formed by the body film 10 made of a laminated film constituted of a plastic film or the like.

The container 1 is a container for containing, for example, a powder such as powdered milk for infant, powdered coffee and powdered supplements, or a granular material such as rice and coffee beans. In addition, the container 1 may be a container for containing paste-like contents such as miso and jam, or a liquid. In addition, the contents of the container 1 are not limited to foods, but can also be daily necessities such as detergents and caulking materials.

The container 1 has a substantially rectangular parallelepiped shape (substantially square prism shape). Further, the shape of the container 1 is not limited to a rectangular parallelepiped, but may be, for example, a tubular shape, or an approximately polygonal prism other than a square prism.

Here, in the present embodiment, the mold core 20 of a mold 2 is formed to have a tubular shape whose cross section is rectangular, a mold axis passing through the center of the lateral cross section is referred to as a mold axis O, a direction along the mold axis O is referred to as an axial direction, and along the mold axis O, the lower mold 22 side is referred to as a lower side and the upper mold 21 side is referred to as an upper side. In addition, in a plan view when seen in the axial direction, a direction orthogonal to the mold axis O is referred to as a radial direction, and a direction around the mold axis O is referred to as a circumferential direction.

### <Container Main Body>

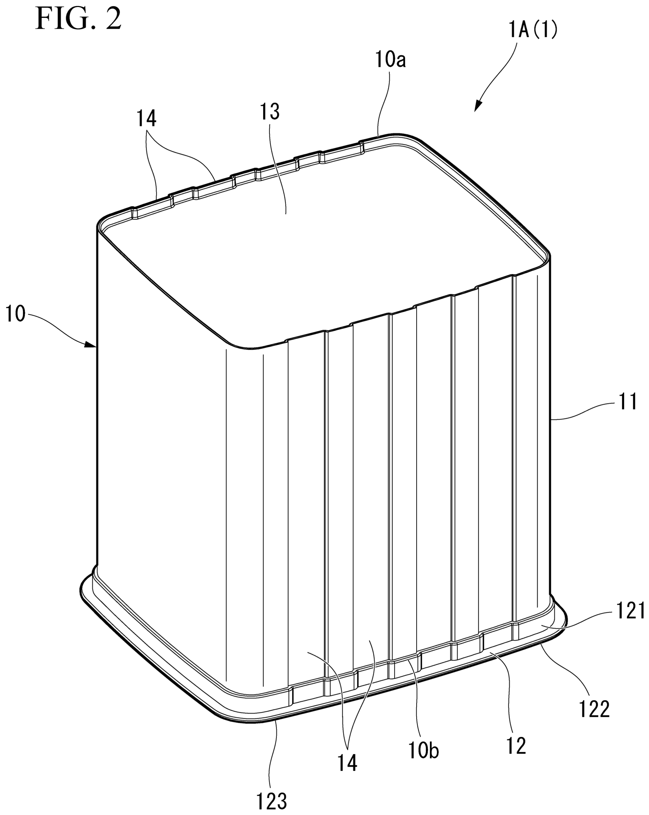

As shown in FIG. 1 and FIG. 2, the container main body 1A includes a body member 11, the frame member 12 provided on an upper end of the body member 11, and the bottom member 13 provided on a lower end of the body member 11. An upper end of the container main body 1A forms the lower opening end 10b that opens, and a lower end of the container main body 1A forms the upper opening end 10a that is closed by the bottom member 13.

Further, the upper end (lower opening end 10b) of the body member 11 described above corresponds to a lower end of the body film 10 attached to the mold core 20, which is close to the lower mold 22, and the lower end (upper opening end 10a) of the body member 11 described above corresponds to an upper end of the body film 10 attached to the mold core 20, which is close to the upper mold 21.

The body member 11 is a tubular body including the upper opening end 10a and the lower opening end 10b. As will be described later in the method of manufacturing the container main body 1A, the body member 11 is formed into a tubular shape by, for example, performing lap seal of overlapping and adhering an inner side surface of one end portion of both end portions in the circumferential direction of the rectangular body film 10 to an outer side surface of the other end portion.

In addition, the body member 11 can stand by itself in a state of tubular body when the upper opening end 10a or the lower opening end 10b is placed on a flat surface. Here, "stand by itself" means that the body member 11 has a sufficient rigidity to maintain a self-standing state without buckling or deforming due to its own weight by forming it into a tubular or bag-like shape using the body film 10.

The body film 10 is made of a laminate including, for example, a heat-sealing layer that constitutes an outer circumferential surface of the body member 11, an intermediate layer that applies predetermined strength, gas barrier properties, or the like, to the body film 10, and a heat-sealing layer that constitutes an inner circumferential surface of the body member 11. The layers of the laminate are adhered by an adhesive layer. The laminated structure of the body film 10 is just an example and can be modified as appropriate.

The heat-sealing layer is a layer that can be heat-sealed. Accordingly, the heat-sealing layer is bonded to the frame member 12 or the bottom member 13. The heat-sealing layer is a plastic film formed of a resin material consisting of, for example, low-density polyethylene (LDPE), medium-density polyethylene (MDPE), high-density polyethylene (HDPE), straight-chain low-density polyethylene (L-LDPE), polypropylene (PP), or the like. The heat-sealing layer is preferably an unstretched film made of these resin materials. Alternatively, the heat-sealing layer may be a multi-layered film made by co-extrusion of these or other resin materials that are combined. A range of the thickness of the heat-sealing layer is preferably 10 to 200 µm, more preferably 20 to 150 µm.

The intermediate layer is provided between the heat-sealing layers, and preferably has excellent printability as well as piercing strength, tensile strength, and shock resistance. The intermediate layer is a plastic film formed of a resin material consisting of, for example, medium-density polyethylene (MDPE), high-density polyethylene (HDPE), a polyester such as polyethylene terephthalate (PET) or polybutylene terephthalate (PBT), polypropylene (PP), polyamide (PA), ethylene vinyl alcohol copolymer (EVOH), or the like. The intermediate layer may be either a stretched or unstretched film made of the above-described materials. A range of the thickness of the intermediate layer is preferably 4 to 50 µm, more preferably 7 to 30 µm.

In addition, the intermediate layer may be, for example, a metal foil made of aluminum, magnesium, iron, copper, or the like, a vapor-deposited film on which a metal such as aluminum or magnesium or an oxide such as silicon oxide is vapor-deposited, or a coated film coated with a barrier coating agent such as polyvinylidene chloride. By providing any of these as the intermediate layer, the body film 10 is allowed to have gas barrier properties. In addition, the intermediate layer may be a multi-layered plastic film made by co-extrusion of a plurality of types of resin materials that are combined. The intermediate layer may be made of one layer, or two or more layers.

The body member 11 is not limited to the body film 10 formed into a tubular shape using a single sheet by lap seal or the like. For example, the body member 11 may be formed into a tubular shape by bending, toward the body member side, a back adhesive portion obtained by heat-sealing back surfaces (inner side surfaces) of left and right end portions of a single rectangular body film, may be formed into a tubular shape by heat-sealing opposing both edge portions of two rectangular body films, or may be a tubular body obtained by cutting a tube made of an inflation-formed single-layer or multi-layer plastic film to have an arbitrary length.

The body member 11 has a rectangular lateral cross section. A pair of side surfaces of the body member 11 extending in a long-side direction X2 along a long side of the rectangular shape are provided with a plurality of concave grooves 14 extending on the entire length of the body member 11 in an upward/downward direction (axial direction) at intervals in the circumferential direction (long-side direction X2). In the present embodiment, four concave grooves 14 are formed in each of the side surfaces. In the formed container main body 1A, by providing the concave groove 14 extending on the entire length of the body member 11 in the upward/downward direction, it is expected that the compression strength of the body member 11 in a direction along the mold axis O can be improved.

Further, the tubular body film 10 before being manufactured into the container 1 using the mold 2 is not provided with the concave grooves 14 described above. The perimeter of the body film 10 is set to be, for example, about 1.2 mm larger than the perimeter (in other words, the perimeter of the mold core 20 obtained by assuming that the concave portions 24 are not formed in the mold core 20) of the mold core 20 excluding the lengths of concave inner surfaces of concave portions 24 described below. Then, the perimeter of the body film 10 is set to approximately the same as the entire perimeter of the mold core 20 including the lengths of the concave inner surfaces of the concave portions 24. That is, the perimeter of the body film 10 is approximately equal to the length when the body film 10 closely contacts the mold core 20 without any gaps in a state in which the mold is closed and the body film 10 closely contacts the concave portions 24 of the mold core 20. When the perimeter of the body film 10 is excessively longer than the entire perimeter of the mold core 20, the excess portion of the body film 10, which has become loose and into non-closely contact state, may be gathered in an area between split slide molds 23A and 23B described below, i.e., a central portion of the mold core 20 in a short-side direction X1, and may be cut off by the split slide molds 23A and 23B, causing a defect in which a hole is created.

The frame member 12 is provided to be joined to the outer circumferential surface of the lower opening end 10b of the body member 11. The frame member 12 reinforces an edge portion of the lower opening end 10b such that the lower opening end 10b is maintained in a predetermined opening shape (rectangular shape, polygonal shape, circular shape, or the like). The frame member 12 is formed in a first molding space S1 of the mold 2 described below.

As shown in FIG. 1, FIG. 3 and FIG. 4, the frame member 12 is constituted of a reinforcing portion 121, a flange portion 122, and a fitting portion 123. The reinforcing portion 121 is disposed so as to cover the lower opening end 10b of the body member 11 from the outside, and reinforces the lower opening end 10b. The fitting portion 123 is fitted into a fitted portion (not shown) formed in the lid member (not shown) when the lid member is attached to the container main body 1A. The flange portion 122 is disposed between the reinforcing portion 121 and the fitting portion 123 and holds the lid member fitted into the fitting portion 123. A material of the frame member 12 is, for example, low-density polyethylene, medium-density polyethylene, high-density polyethylene, straight-chain low-density polyethylene, polypropylene, or the like.

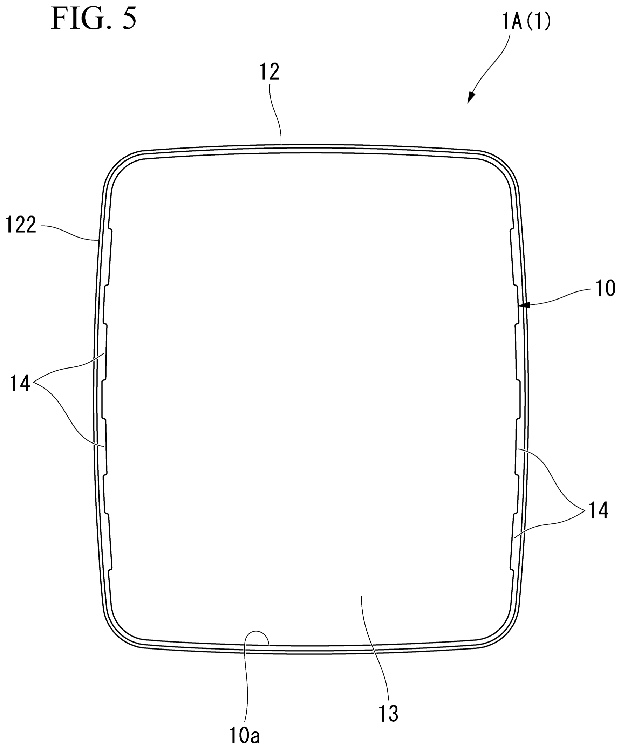

As shown in FIG. 2 and FIG. 5, the bottom member 13 is formed to be joined to the inner circumferential surface of the lower end of the body member 11 and to close the upper opening end 10a of the body member 11. The bottom member 13 air-tightly or liquid-tightly closes the lower opening end 10b of the body member 11 depending on the type or property of the contents of the container 1. A material of the bottom member 13 is, for example, low-density polyethylene, medium-density polyethylene, high-density polyethylene, straight-chain low-density polyethylene, polypropylene, or the like.

### <Mold>

Next, the mold 2 will be described with reference to FIG. 6 to FIG. 11. As shown in FIG. 6, the mold 2 includes the upper mold 21 and the lower mold 22 provided with the mold core 20 as a part thereof. Here, the upper mold 21 and the lower mold 22 correspond to the frame mold 2A. The lower mold 22 includes a slide mold 23. In the mold 2, in a state in which the body film 10 is attached to the mold core 20, the upper mold 21 and the lower mold 22 provided with the slide mold 23 are closed, and furthermore, by injecting a resin into a desired location, the frame member 12 and the bottom member 13 shown in FIG. 1 and FIG. 2 can be integrally formed in the body film 10.

The slide mold 23 provided in the lower mold 22 is provided so as to be able to move forward and rearward by being guided by an upper surface 22a of the lower mold 22. The upper surface 22a of the lower mold 22 is in contact with a lower surface of the slide mold 23 around at least the mold core 20.

The mold core 20 is located at the center of the upper surface 22a of the lower mold 22 in a plan view. A "plan view" is referred to as a view seen from the mold axis O. The mold core 20 is formed such that the lateral cross section (cross section in a direction orthogonal to the mold axis O) from the base end side to the tip portion thereof is the same approximately rectangular, and the outer perimeter of the mold core 20 is the same on the entire length thereof in the axial direction. The body film 10 formed in a tubular shape is attached to a circumferential wall portion 20a of the mold core 20 using a delivery jig (not shown). A method of delivering the body film 10 to the mold core 20 using the delivery jig will be described later.

The mold core 20 includes the circumferential wall portion 20a (side surfaces 20aA, 20aB, 20aC and 20aD) having four surfaces that form a tubular shape, and a top surface 20b covering a tip of the circumferential wall portion 20a. Each of a pair of first side surfaces 20aA and 20aB constituting a long-side portion in the circumferential wall portion 20a of the mold core 20, the pair of first side surfaces 20aA and 20aB being located to be opposite to each other, is provided with the plurality of concave portions 24 extending on the entire length thereof in the upward/downward direction (axial direction) and arranged in the circumferential direction. Here, four concave portions 24 are formed in each of the first side surfaces 20aA and 20aB. In addition, a pair of second side surfaces 20aC and 20aD, which constitute short-side portions in the circumferential wall portion 20a and are located to be opposite to each other, are formed in flat surfaces without any irregularities. The concave portion 24 is provided to form the concave groove 14 (see FIGS. 1 and 2) to be formed in the body film 10 described above.

The entire perimeter of the mold core 20, including the lengths of the concave inner surfaces of the concave portions 24, is set to approximately the same as the perimeter of the body film 10. That is, the total length in the circumferential direction of the lengths of the concave inner surfaces of all (eight in this case) the concave portions 24 formed in the mold core 20 and the lengths of parts of the mold core 20 other than the concave portions 24 is set to the same as the perimeter of the body film 10 including the extra length (for example, about 1.2 mm) of the body film 10 described above. Accordingly, when the body film 10 is mold-closed, the body film 10 is attached to the mold core 20 in a close contact state.

The slide mold 23 includes the split slide molds 23A and 23B split in two in the short-side direction X1 of the mold core 20 with the mold axis O of the mold core 20 interposed therebetween. That is, the split slide molds 23A and 23B are provided so as to be movable forward and rearward in the short-side direction X1. When the mold is closed, the slide mold 23 covers the entire circumferential wall portion 20a of the mold core 20 from the outside.

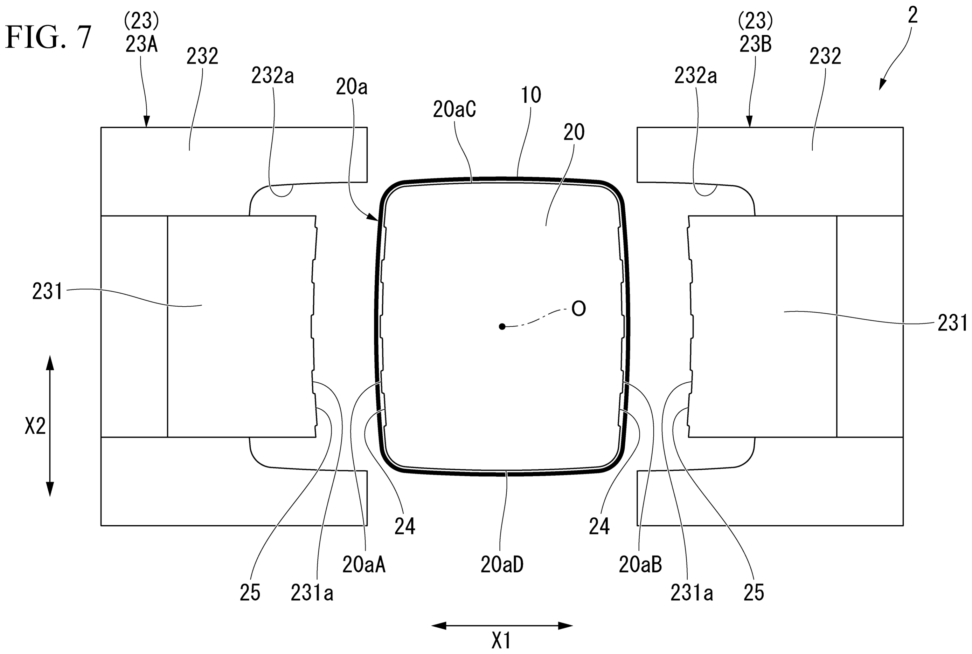

As shown in FIGS. 7 to 9, each of the split slide molds 23A and 23B includes a slide insert portion 231, and a slide mold closure portion 232.

The slide insert portion 231 is disposed in the central portion of the slide mold closure portion 232 in the long-side direction X2 of the mold core 20, and is provided so as to be movable relative to the slide mold closure portion 232 in the short-side direction X1. The slide insert portion 231 includes a first mold closure surface 231a facing only the first side surface 20aA or 20aB of the mold core 20. The first mold closure surfaces 231a are formed with a plurality of convex portions 25 (same number as that of concave portions 24) provided to be engageable with the plurality of concave portions 24 formed in the first side surfaces 20aA and 20aB at intervals in the long-side direction X2. A protrusion height of the convex portion 25 is, for example, preferably 0.5 to 2.5 mm, more preferably 0.7 to 1.5 mm, further preferably 1.0 to 1.2 mm, similarly to a recess depth of the concave portion 24. During mold closure, the slide insert portion 231 is mold-closed before the slide mold closure portion 232 by causing the first mold closure surface 231a to contact the first side surface 20aA or 20aB of the mold core 20.

The slide mold closure portion 232 is movable relative to the slide insert portion 231 in the short-side direction X1. The slide mold closure portion 232 includes a second mold closure surface 232a that contacts an area from corners of the mold core 20 to the second side surfaces 20aC and 20aD. During mold closure, after the slide insert portion 231 is closed, the slide mold closure portion 232 is mold-closed by causing the second mold closure surface 232a to contact the area from the corners of the mold core 20 to the second side surfaces 20aC and 20aD.

As shown in FIGS. 6 and 7, a space corresponding to the shape of the frame member 12 (see FIG. 1) to be molded to the lower opening end 10b of the body film 10 is formed in inner side surfaces of the slide insert portions 231 of the split slide molds 23A and 23B, and in a state in which the slide mold 23 is located in a mold-closing position with respect to the lower mold 22 (mold core 20), the first molding space S1 for forming the frame member 12 is formed between the base end portion of the mold core 20 and the upper surface 22a of the lower mold 22. The first molding space S1 communicates with a resin injection part (not shown) provided in the slide mold 23 for filling with a molten resin. Accordingly, the molten resin is to flow into the first molding space S1. The molten resin is filled in the first molding space S1 and is hardened, whereby the frame member 12 is integrally joined to the lower opening end 10b of the body film 10.

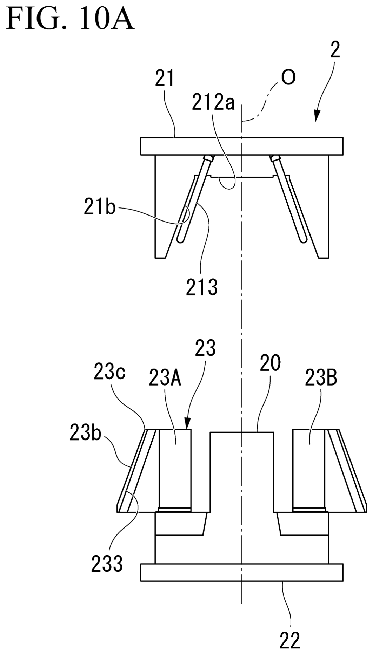

As shown in FIGS. 6 and 10A to 10C, the outer circumferential portions of the split slide molds 23A and 23B are provided with tapered surfaces 23b that gradually decrease in diameter from bottom to top.

In addition, upper surfaces 23c of the split slide molds 23A and 23B are provided with positioning holes 233 formed along the tapered surfaces 23b. The positioning holes 233 are provided such that positioning pins 213 provided in the upper mold 21 can be inserted therein. The upper mold 21 approaches the lower mold 22 in the axial direction, and the positioning pins 213 of the upper mold 21 are inserted into the positioning holes 233, thereby causing the pair of split slide molds 23A and 23B to move in an approaching direction (mold closure direction). That is, at the same time as the upper mold 21 moves, the slide mold 23 is also closed.

The upper mold 21 is provided so as to be movable forward and rearward in the axial direction relative to the mold core 20 of the lower mold 22. The upper mold 21 includes a base portion 211, and an outer circumferential frame 212 protruding downward from the base portion 211. The outer circumferential frame 212 is an outer circumferential sidewall formed on the entire circumference in the circumferential direction. The inner circumferential portion of the outer circumferential frame 212 is formed with a tapered surface 21b that gradually increase in diameter from top to bottom. A bottom surface (lower surface) 212a is formed inside the outer circumferential frame 212.

In addition, the lower surface of the base portion 211 is provided with the positioning pins 213 formed along the tapered surface 21b. The positioning pins 213 are provided so as to be insertable into the positioning holes 233 formed in the slide mold 23. The upper mold 21 approaches the lower mold 22 in the axial direction, and the positioning pins 213 of the upper mold 21 are inserted into the positioning holes 233, thereby causing the pair of split slide molds 23A and 23B to move in the approaching direction (mold closing direction).

As shown in FIG. 6, in a state in which the upper mold 21 is in a mold-closing position relative to the mold core 20, a second molding space S2 corresponding to the shape of the bottom member 13 (see FIG. 2) to be molded to the upper opening end 10a of the body film 10 is formed below the lower surface 212a of the outer circumferential frame 212 of the upper mold 21, between the lower surface 212a and the top surface 20b of the mold core 20. The second molding space S2 communicates with a resin injection part (not shown) provided in the upper mold 21 for filling with a molten resin. Accordingly, the molten resin is to flow into the second molding space S2. The molten resin is filled in the second molding space S2 and is hardened, whereby the bottom member 13 is integrally joined to the upper opening end 10a of the body film 10.

### <Container-Manufacturing Method>

Next, a method of manufacturing the container 1 using the above-described mold 2 will be described in detail with reference to FIGS. 1 to 11.

First, the tubular body film 10 is formed using the laminated film. For example, the body film 10 is formed by performing lap seal of overlapping end portions of the laminated film formed to be rectangular.

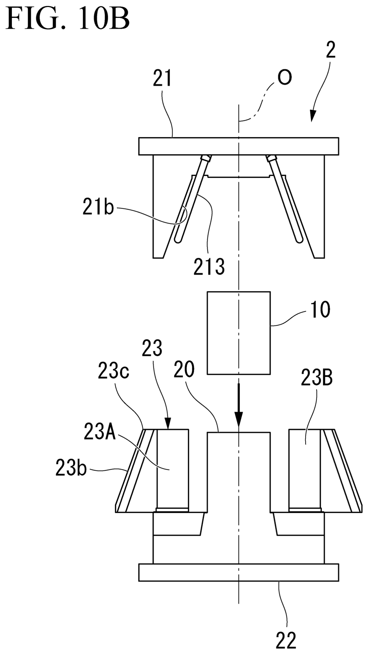

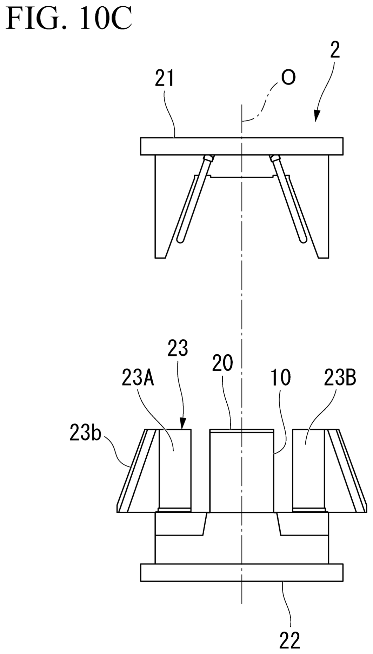

FIGS. 10A to 10C are side views showing steps of attaching the body film 10 to the mold 2. FIG. 10A shows a mold-opened state in which the upper mold 21 and the lower mold 22 are separated. FIG. 10B shows a state in which the body film 10 waits above the mold core 20 and is held by the delivery jig (not shown). FIG. 10C shows a state in which the body film 10 is attached to the mold core 20.

Next, as shown in FIG. 10A, the mold 2 is brought into a mold-opened state. That is, the mold-opened state is a state in which the upper mold 21 is separated from the lower mold 22 including the slide mold 23 and the mold core 20. Then, as shown in FIG. 10B, when the mold 2 is in the mold-opened state, the tubular body film 10 held by the delivery jig (not shown) is caused to wait above the mold core 20. After that, as shown in FIG. 10C, the waiting body film 10 is attached to cover the mold core 20. In this case, if the body film 10 is formed into a square tubular shape in advance, the attaching to the mold core 20 can be smoothly performed, but it is not necessary to form it into the square tubular shape in advance, and if the body film 10 is formed into at least a tubular shape, the attaching to the mold core 20 can be performed without any problems.

At this time, the body film 10 is not provided with the concave grooves 14, so the body film 10 is attached to the mold core 20 with a small gap therebetween. That is, the perimeter of the body film 10 is set to be slightly larger than the perimeter of only the outer circumference of the mold core 20 excluding the inner circumferential lengths of the concave portions 24 thereof, so the body film 10 can be easily attached to the mold core 20.

Next, as shown in FIGS. 7, 8 and 11, the upper mold 21 is lowered and the positioning pins 213 of the upper mold 21 are inserted into the positioning holes 233 of the slide mold 23, thereby moving the pair of split slide molds 23A and 23B toward the mold core 20 in the short-side direction X1.

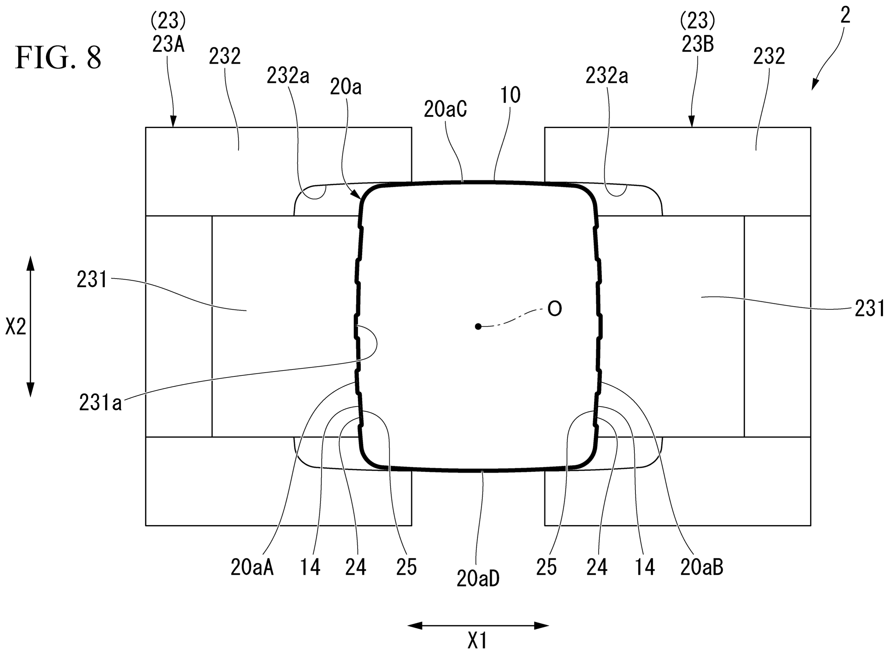

Specifically, as shown in FIG. 8, first, the slide insert portions 231 are moved toward the mold core 20, and the first mold closure surfaces 231a are brought into contact with the first side surfaces 20aA and 20aB of the mold core 20 with the body film 10 sandwiched therebetween. At this time, the convex portions 25 of the first mold closure surfaces 231a are engaged with the concave portions 24 of the first side surfaces 20aA and 20aB. Accordingly, the concave grooves 14 are formed in the body film 10 located on the first side surfaces 20aA and 20aB.

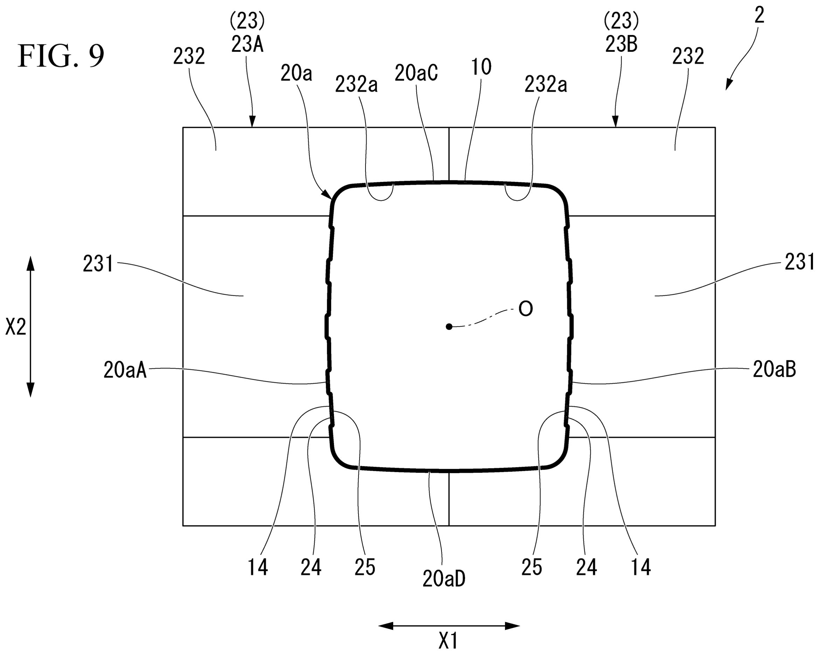

After that, as shown in FIG. 9, the slide mold closure portions 232 are moved toward the mold core 20, and the second mold closure surfaces 232a are brought into contact with the second side surfaces 20aC and 20aD of the mold core 20 with the body film 10 sandwiched therebetween. At the same time, as shown in FIG. 6, the upper mold 21 is also moved downward, completing the mold closure.

In a state in which the mold closure is completed, the molding spaces S1 and S2 are formed between the body film 10 and the mold 2. Specifically, the first molding space S1 is formed between the base end portion of the mold core 20 and the upper surface 22a of the lower mold 22. In addition, the second molding space S2 is formed between the lower surface 212a of the outer circumferential frame 212 of the upper mold 21 and the top surface 20b of the mold core 20. Then, in the next step, a synthetic resin material in a molten state is injected into the first molding space S1 and the second molding space S2 by the insert injection molding means through filling channels (not shown) provided in the mold 2. Thereby, the frame member 12 and the bottom member 13 integrally joined to the body film 10 are molded. Accordingly, the container main body 1A is manufactured.

Next, the method of manufacturing the container 1 configured in this way and functions of the mold 2 and the container 1 will be described in detail.

The method of manufacturing the container 1 according to the present embodiment includes using the frame mold 2A including the upper mold 21 and the lower mold 22 provided with the mold core 20, attaching the tubular body film 10 made of plastic film laminate to the mold core 20, and injecting a molten resin material into the frame mold using the insert injection molding means to form the bottom member 13 on the upper end portion of the body film 10 and to form the frame member 12 on the lower end portion thereof. In the method of manufacturing the container 1, the concave portion 24 extending in the upward/downward direction is formed in at least the upper and lower end portions of the attachment surface of the mold core 20 for the body film 10, the convex portion 25 is formed in a position of the frame mold corresponding to the concave portion 24, and the bottom member 13 and the frame member 12 are formed in a state in which the body film 10 is sandwiched between the concave portion 24 and the convex portion 25.

In addition, the mold 2 according to the present embodiment includes the frame mold 2A including the upper mold 21 and the lower mold 22. The lower mold 22 includes the mold core 20 to which the tubular body film 10 made of plastic film laminate is attached. The frame mold 2A includes the resin injection part that injects a molten resin material using the insert injection molding means to form the bottom member 13 in the upper end portion of the body film 10 and the frame member 12 in the lower end portion thereof, the concave portion 24 extending in the upward/downward direction is formed in at least the upper and lower end portions of the attachment surface of the mold core 20 for the body film 10, the convex portion 25 is formed in a position of the frame mold corresponding to the concave portion, and the bottom member 13 and the frame member 12 can be formed in a state in which the body film 10 is sandwiched between the concave portion 24 and the convex portion 25.

According to the container-manufacturing method of the present embodiment, when the body film 10 is attached to the mold core 20 and mold closure is not complete, the body film 10 is formed to have a perimeter such that the body film 10 is along the concave portion 24 and does not closely contact the mold core 20. That is, since the perimeter of the body film 10 is larger than the perimeter of the mold core 20 excluding the concave portion 24, the body film 10 can be easily attached to the mold core 20.

In addition, when the mold 2 is closed, the concave portion 24 of the mold core 20 and the convex portion 25 on the frame mold side fit together through the body film 10, so the body film 10 closely contacts the concave portion 24, and the entire body film 10 can be caused to closely contact the mold core 20 without any excess of the body film 10 in the circumferential direction. Therefore, this can prevent wrinkles from occurring due to pinching of the body film 10 during mold closure as in the related art, and allows the bottom member 13 and the frame member 12 to be formed with high quality in the upper and lower end portions of the body film 10, thereby preventing deterioration in the appearance quality of the container 1.

In addition, in the present embodiment, the concave portion 24 is provided on the entire length of the mold core 20 in the upward/downward direction, thereby making it easier to remove the body film 10 of the molded container 1 from the mold core 20 in the upward/downward direction. Therefore, a simple configuration can be obtained in which the mold core 20 is removed from the body film 10 in one direction, so the mold 2 can be simplified and manufacturing costs can be reduced.

In addition, in the present embodiment, by moving, in a direction orthogonal to the attachment surface, the first mold closure surface 231a (mold surface) provided with the convex portion 25 of the frame mold 2A, the convex portion 25 of the frame mold can be caused to contact, in a direction orthogonal to the concave portion 24, the concave portion 24 of the mold core 20 extending in the upward/downward direction, thereby reliably attaching the body film 10 to the concave portion 24 during mold closure.

In addition, in the present embodiment, by using the mold core 20 whose lateral cross section is rectangular, the attachment surface of the rectangular mold core 20 for the body film 10 becomes flat, and the concave portion 24 can be formed in the flat attachment surface. Therefore, during mold closure, the convex portion 25 of the frame mold can be easily and reliably engaged with the concave portion 24.

In addition, in the present embodiment, the concave portions 24 are formed in two side surface portions (first side surfaces 20aA and 20aB) located to be opposite to each other of four attachment surfaces. Therefore, with a simple structure in which the convex portions 25 of the frame mold are engaged with the concave portions 24 of the two side surface portions located to be opposite to each other from both sides with the mold core 20 interposed therebetween, the body film 10 can be attached to the mold core 20 uniformly in the circumferential direction, allowing a high-quality container 1 with excellent appearance to be manufactured.

In addition, in the present embodiment, the connecting portion connecting two portions of the laminate in the body film 10 together in the circumferential direction and the concave portion 24 are disposed in different positions in the circumferential direction. Therefore, the connecting portion of the body film 10 and the concave portion 24 do not overlap, so the convex portion 25 can be engaged with the concave portion 24 with the body film 10 sandwiched therebetween, and the body film 10 can be attached to the mold core 20 on the entire range thereof in the circumferential direction.

In addition, in the present embodiment, since the container 1 is manufactured using the manufacturing method described above, the container 1 can be provided with the above-described effects.

In addition, in the present embodiment, since the container 1 is manufactured using the mold 2 described above, the container 1 can be provided with the above-described effects.

In the container-manufacturing method, the mold, and the container according to the present embodiment configured as described above, the tubular body film can be easily attached to the mold core 20, and pinching of the film during mold closure can be prevented, suppressing deterioration in the appearance quality.

Hereinabove, although the embodiments of the present invention have been described, these embodiments are presented as examples and are not intended to limit the scope of the invention. The embodiments can be implemented in various other forms, and various omissions, substitutions, and modifications can be made within the scope of the invention. The embodiments and modifications thereof include, for example, those that a person having ordinary skill in the art can easily imagine, those that are substantially the same, and those that are within the scope of equivalents.

For example, in the above embodiment, although an example is shown in which the body film 10 has a tubular shape with a substantially rectangular cross section, the cross-sectional shape thereof is not limited to a substantially rectangular shape, and may be, for example, a circular shape.

In addition, the mold 2 of the present embodiment has a configuration in which the lower mold 22 is provided with the slide mold 23, and a mold is adopted therefor having a configuration in which the split slide molds 23A and 23B slide in the short-side direction X1 relative to the lower mold 22, but the mold 2 is not limited to this configuration. For example, a mold may be used having a configuration in which the slide mold 23 is omitted. In this case, a configuration may be used in which, for example, the convex portion 25 is provided in a portion of the upper mold and can approach or move away from the concave portion 24 of the mold core 20.

In addition, in the present embodiment, the concave portion 24 of the mold core 20 may be formed in each of the four attachment surfaces. In this case, since the convex portions 25 of the frame mold are engaged with all the concave portions 24 of the four attachment surfaces, the body film 10 can be attached to the mold core 20 uniformly in the circumferential direction, improving the quality of the container.

Furthermore, the concave portion 24 may be provided in only one of the plurality of attachment surfaces of the mold core 20.

In addition, in the present embodiment, a configuration is used in which the concave portion 24 is provided on the entire length of the mold core 20 in the upward/downward direction, but an area in which it is provided is not limited to the entire length. In short, it is sufficient that the concave portion extending in the upward/downward direction is formed in at least the upper and lower end portions of the attachment surfaces of the mold core 20 for the body film 10.

Further, the shape (depth, width (length in the circumferential direction)) and the number of the concave portions 24, and the shape (height, width (length in the circumferential direction)) and the number of the convex portions 25 can be set to any desired configuration.

In addition, in the present embodiment, the bottom member 13 (upper molded part) integrated with the bottom of the body film 10 may be formed by closing the upper mold 21 in a state in which a bottom surface film made of a laminated film having the same configuration as the body film 10 is placed on the top surface 20b of the mold core 20, and injecting a molten resin material into the second molding space S2 using the insert injection molding means.

Further, regarding the components of the body film 10, from the viewpoint of material recyclability, the higher the mono-material ratio (single material occupancy rate) of the body film 10, the better, and it is preferably 80% or more and is more preferably 90% or more. Specifically, the resin material that constitutes the body film 10 may be polyethylene, polypropylene, or a mixture of polyethylene and polypropylene. A high mono-material ratio is preferable in that it can reduce the amount of residue during material recycling, enables more efficient recycling and can reduce the environmental load.

### REFERENCE SIGNS LIST

1 Container
1A Container main body
2 Mold
2A Frame mold
10 Body film (attachment surface)
10a Upper opening end
10b Lower opening end
11 Body member
12 Frame member (lower molded part)
13 Bottom member (upper forming part)
14 Concave groove
20 Mold core
20a Circumferential wall portion
20aA, 20aB First side surfaces
20aC, 20aD Second side surfaces
20b Top surface
21 Upper mold
22 Lower mold
23 Slide mold
23A, 23B Split slide mold
231 Slide insert portion
231a First mold closure surface (mold surface)
232 Slide mold closure portion
232a Second mold closure surface
24 Concave portion
25 Convex portion
O Mold axis
S1 First molding space
S2 Second molding space
X1 Short-side direction
X2 Long-side direction

## Claims

1. A container-manufacturing method, comprising:
using a frame mold including an upper mold and a lower mold provided with a mold core;
attaching a tubular body film to the mold core;
injecting a molten resin material into the frame mold by an insert injection molding means to form an upper molded part in an upper end portion of the body film and to form a lower molded part in a lower end portion of the body film,
wherein a concave portion extending in an upward/downward direction is formed in at least upper and lower end portions of an attachment surface of the mold core for the body film,
a convex portion is formed in a position of the frame mold corresponding to the concave portion, and
the upper molded part and the lower molded part are formed in a state in which the body film is sandwiched between the concave portion and the convex portion.

2. The container-manufacturing method according to claim 1, wherein the concave portion is provided on an entire length of the mold core in the upward/downward direction.

3. The container-manufacturing method according to claim 1, wherein a mold surface in which the convex portion is formed moves in a direction orthogonal to the attachment surface.

4. The container-manufacturing method according to claim 1, wherein the mold core, whose lateral cross section is rectangular, is used.

5. The container-manufacturing method according to claim 4, wherein the concave portion is formed in each of two side surface portions located to be opposite to each other of four attachment surfaces, the attachment surface including the four attachment surfaces.

6. The container-manufacturing method according to claim 4, wherein the concave portion is formed in each of four attachment surfaces, the attachment surface including the four attachment surfaces.

7. The container-manufacturing method according to claim 1, wherein the upper molded part is formed in a state in which a bottom surface film is placed on a top surface of the mold core.

8. The container-manufacturing method according to claim 1, wherein a connecting portion connecting two portions of the body film together in a circumferential direction, and the concave portion are disposed in different positions in the circumferential direction.

9. A mold, comprising:
a frame mold including an upper mold and a lower mold,
wherein the lower mold is provided with a mold core to which a tubular body film is attached,
the frame mold is provided with a resin injection part configured to inject a molten resin material by an insert injection molding means thereinto to form an upper molded part in an upper end portion of the body film and to form a lower molded part in a lower end portion of the body film,
a concave portion extending in an upward/downward direction is formed in at least upper and lower end portions of an attachment surface of the mold core for the body film,
a convex portion is formed in a position of the frame mold corresponding to the concave portion, and
the mold is configured to form the upper molded part and the lower molded part in a state in which the body film is sandwiched between the concave portion and the convex portion.

10. A container manufactured by the container-manufacturing method according to any one of claims 1 to 8.

11. A container manufactured using the mold according to claim 9.
